# EUROPEAN PATENT APPLICATION

(11) **EP 4 215 084 A1**
(43) Date of publication of application: **26.07.2023**
(21) Application number: 21868783.8
(22) Date of filing: 09.09.2021
(51) Int. Cl.: A47B 81/00, B65G 1/14

(54) **SUPPORT FOR BARRELS**

(30) Priority: 21.09.2020 ES 202032042 U
(71) Applicant: Candela Diaz, Francisco Antonio, 03203 Elche / Alicante (ES)
(72) Inventor: Candela Diaz, Francisco Antonio, 03203 Elche / Alicante (ES)
(74) Representative: Maldonado Jordan, Julia
(86) International application number: PCT/ES2021/070653
(87) International publication number: WO 2022/058634

(57) **Abstract**

Support for barrels comprising at least two longitudinal elements, two transversal elements, two upper support elements, and two lower support elements, and which is characterized in that: the two longitudinal elements will be parallel, with at least two ends that will comprise means of connection to at least one other longitudinal element where the two transversal elements will be located at each end of the longitudinal elements, keeping them together and achieving the parallelism described in the previous point; the two upper support elements each comprise at least one upper seat face, which will face each other along the longitudinal axis of the longitudinal elements; and the two lower support elements comprise at least one lower seat face, which will face each other along the longitudinal axis of the longitudinal elements.

## Description

### FIELD OF THE INVENTION

The present invention refers to the field of liquid storage in barrels or other liquid storage elements, more specifically, it refers to the structural elements that serve as a support for barrels or other liquid storage elements, which has the objective of achieving a modular configuration, adaptable to any room shape, and easy to transport and install.

The device object of the present invention has the specific application in the sectors dedicated to the manufacture, distribution and sale of stackable modular structures for the wine industry, such as the winery industry for wine and other beverages.

### BACKGROUND OF THE INVENTION

Currently, the stackable structural supports that are applicable in the winery industry are widely known, with which a stacking of the barrels containing the liquid to be stored is sought, such as wine, cava or other similar beverages.

These structural supports must be prepared to withstand and sustain a considerable weight, formed by the numerous barrels stacked and stored inside a room, so they must comprise solid structures with enough mechanical resistance, assuming a high cost when it comes to the installation, and implying difficulties when adapting them to the different spaces used by the winemakers in the storage of this type of elements.

The document ES2251319 belongs to the state of the art, in which a modular device for the support of barrels is described that comprises a base structure on which the barrels are placed, arranged in multiple rows and/or columns, formed by at least two substantially parallel bars, of mirror shape and geometry, each of said bars being provided, at one end, with a male connecting element and, at the opposite end, with a complementary female connecting element with respect to said connecting element. male joint, each bar comprising at least one pair of upper support elements in the form of wedges, with facing inclined surfaces, which hold a barrel in a stable position, and at least another pair of lower support elements that are supported on a lower barrel.

Document ES 1160133 also belongs to the state of the art, in which a support device for barrels is described that comprises at least one support module that can be coupled to at least another support module, where each support module comprises at least one pair of support parts, configured to be removably embedded by means of engagement means in at least one pair of parallel beams, where the support parts comprise an elongated geometry with a bar ending in two ends that comprise a seat face.

As can be seen, numerous stackable systems that comprise systems made up of various pieces that can be assembled to achieve a basic structure for horizontal and/or vertical storage of different types of barrels belong to the state of the art, so the cost of manufacturing and installation is increased, as a pre-assembly of the different elements is necessary before the actual installation of the set in the room intended for storage.

Another inconvenient of the previous systems is that they include numerous cross-sectional elements that make it difficult to handle and clean the barrels once they are stacked, since they comprise at least one pair of cross-sectional elements for each barrel support assembly.

Nor do they contemplate additional systems that facilitate the tasks of storing, cleaning or stacking the barrels, so they are only considered to hold and store the barrels in the rooms.

### SUMMARY OF THE INVENTION

The support for barrels that the present invention proposes is configured, therefore, as a remarkable novelty within its field of application, since according to its implementation, the aforementioned objectives are satisfactorily achieved, with the characterizing details that do so possible and that conveniently distinguish them from the final claims that accompany this description.

To achieve the previous objectives, the present invention aims to overcome the inconvenient of the prior art, that is, it seeks to achieve a modular, stackable support for barrels, that is easy to assemble or disassemble, comprised by the minimum number of possible parts; which can be customized according to the needs of the user, and that also achieves a simple and comfortable use, with the minimum number of cross-sectional elements that make it difficult to clean and handle the barrels.

To achieve this, the present invention discloses a basic support structure, comprised of two longitudinal beams arranged in a parallel or substantially parallel manner, which comprise a first end and a second end, where each end will have at least one transversal structural element attached to it to keep joined the two longitudinal beams.

The longitudinal beams comprise at least two supports at the top, where each support will comprise an inclined face for direct support of the barrels, being each of the inclined faces facing each other on each pair of supports. So that, at least one quartet of supports is configured to achieve a minimum stability for the barrels that are to be stored.

They also Will include, in their lower face, at least two symmetrical supports to the previous ones, which will rest on the upper part of the barrel placed on the lower level of the barrel stack. So that a minimum stability is also achieved in the supports of the upper level.

Additionally, the present invention may comprise at least one roller in each inclined face of the support elements, which facilitates the introduction and removal of the barrels, allowing sliding thanks to the rollers.

Finally, the present invention may comprise an extra transversal element in the middle part of the longitudinal beams, placed between two barrel sets, which will include an hexagonal or substantially hexagonal - shaped hole in its middle part, that allows the passage of auxiliary devices, such as a conventional barrel cleaner on the market.

In this way, although the arrangement of the barrels is of a staggered type, there will be complete and free access for cleaning any of the barrels placed on the barrel support object of the present invention.

With the previously described, the innovation included in the barrel support are detailed, which achieve the effects proposed at the beginning of this section, correcting the issues not solved by the current systems belonging to the prior state of the art.

### BRIEF DESCRIPTION OF THE DRAWINGS

To complement the description that is being made and in order to help a better understanding of the characteristics of the invention, a set of drawings is attached as an integral part of said description, where, with an illustrative and non-limiting nature, what has been represented has been following:

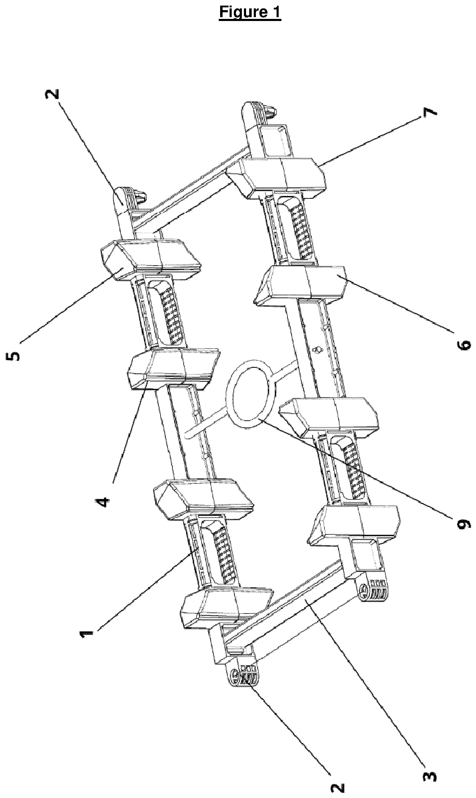

Fig. 1.- General view of the invention

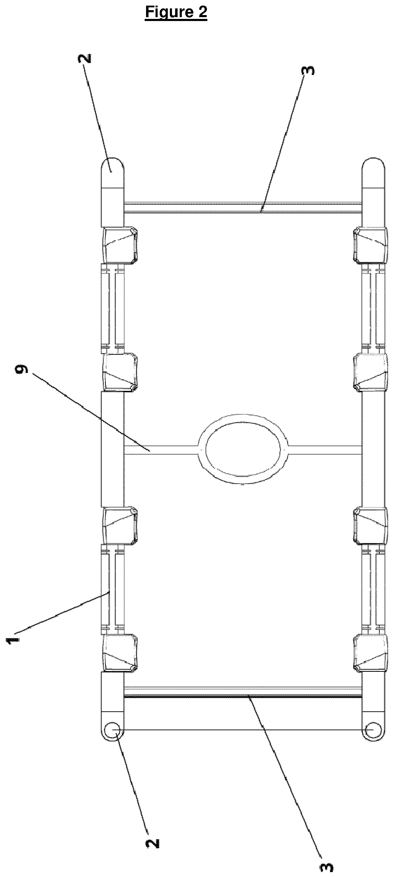

Fig. 2.- Top view of the invention

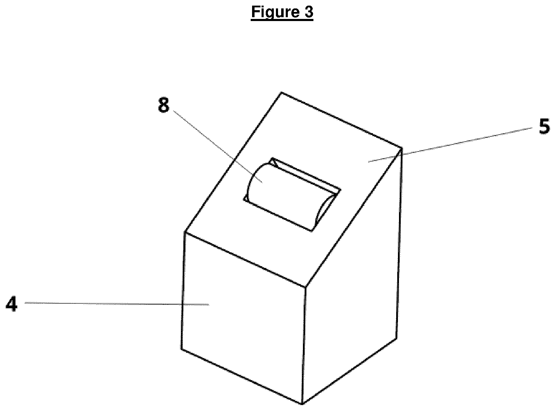

Fig. 3.- General view of a support element with a roller

Relación de referencias y figuras:
1. Longitudinal element
2. Mechanical connection means
3. Transversal element
4. Upper Support element
5. Upper Support face
6. Lower Support element
7. Lower Support face
8. Roller
9. Auxiliar transversal element.

### DETAILED DESCRIPTION OF THE PREFERRED EMBODIMENTS

In the following detailed description of the preferred embodiments, reference is made to the accompanying drawings which form a part of this specification, and in which are shown by way of illustration specific preferred embodiments in which the invention may be embodied. These embodiments are described in sufficient detail to enable those skilled in the art to carry out the invention, and it is understood that other embodiments may be used and logical structural, mechanical, electrical, and/or chemical changes may be made without departing from the scope. of the invention. To avoid details not necessary to enable those skilled in the art to carry out the detailed description should therefore not be taken in a limiting sense.

Particularly, the present invention discloses a support for barrels, which comprise at least two longitudinal elements 1, two transversal elements 3, two upper support elements 4, and two lower support elements, wherein:
- the longitudinal elements 1 are parallel or substantially parallel, with at least two ends with mechanical connection means 2 to at least other longitudinal element 1. These mechanical connection means 2 will be, preferably, a tong- and-groove system, in which one of the longitudinal elements 1 will comprise the male, and the longitudinal element 1 to which the first is connected, will comprise the female, so that, the coupling achieves the union of bot longitudinal elements 1;
- the two transversal elements 3 are located in each end of the longitudinal elements 1, keeping them together and achieving the parallelism between two consecutive longitudinal elements 1, described in the previous point.
- the two upper support elements 4 comprise at least one upper seat face 5, which will face each other along the longitudinal axis of the longitudinal element 1.
- the two lower support elements 6 comprise at least one lower seat face 7, which will face each other along the longitudinal axis of the longitudinal elements 1.

In this way, is achieved a single piece that comprise, preferably, two longitudinal elements, joined by means of two transversal elements, with four upper support elements, for supporting the barrels placed on the upper part of the support elements; and four lower support elements, for supporting the support on the barrel located in the lower level, also at the four support points configured by the lower support elements.

In a preferred embodiment, the support for barrels is characterized in that the upper faces 5 of the upper support elements 4, and the lower faces 7 of the lower support elements 6, comprise at least one roller 8, located so that its rotation is parallel or substantially parallel to the longitudinal axis of the longitudinal element 1.

In this way, it is achieved that the barrels can slide inside or outside the barrel support in a simple and effortless way, only using the rolling elements that allow linear sliding.

In a preferred embodiment, the roller 8 is comprised by an axis and a cylindrical element or substantially cylindrical element.

In a preferred embodiment, the support for barrels comprise an auxiliar transversal element 9, located in the middle of the longitudinal elements 1, which comprises a hole in its intermediate or substantially intermediate part, through which other auxiliary elements can be passed, and that allows the access to the barrel cap, for example.

This greatly facilitates the work of cleaning the barrels, especially in cases in which the stacking of the barrels has been carried out following a staggered distribution.

In a last preferred embodiment, and also referring to cases in which stacking is carried out according to a staggered distribution, the longitudinal elements will comprise a metal core, capable of supporting the cantilevered weight of one of the barrels, so that you can take advantage of the maximum space possible.

The industrial application of the present invention is presupposed clear from the previous development carried out, and from the preferred embodiments mentioned above.

## Claims

1. **Support for barrels** comprising at least two longitudinal elements (1), two transversal elements (3), two upper support elements (4), and two lower support elements (6), **characterized in that**
∘ the two longitudinal elements (1) are parallel or substantially parallel, with at least two ends which comprise mechanical connection means (2) to at least other longitudinal element (1);
∘ the two transversal elements (3) are located in each end of the longitudinal elements (!)
∘ the two upper support elements (4) comprise both upper support faces (5), configured facing each other in the longitudinal axis of the longitudinal elements (1);
∘ the two lower support elements (6) comprise both lower support faces (6), configured facing each other in the longitudinal axis of the longitudinal elements (1).

2. **Support for barrels** according claim 1 **characterized in that** the upper support faces (5) and the lower support faces (7) comprise at least a roller (8), placed parallel or substantially parallel to the longitudinal axis of the longitudinal elements (1).

3. **Support for barrels** according any of the preceding claims **characterized in that** the roller (8) comprise an axis and a cylindrical or substantially cylindrical element.

4. **Support for barrels** according any of the preceding claims **characterized in that** comprises at least an auxiliar transversal element (9), located in the middle or substantially in the middle of the longitudinal elements (1), which comprises a hole in its intermediate area.

5. **Support for barrels** according any of the preceding claims **characterized in that** the mechanical connection means (2) are comprised by a male element in a first end of a first longitudinal element (1); and a female element in a first end of a second longitudinal element (2), where the male and the female are coupled in a removable manner.

6. **Support for barrels** according any of the preceding claims **characterized in that** the longitudinal elements comprise a metal core.
